(19) **Europäisches Patentamt**

**European Patent Office**

**Office européen des brevets**

(11) **EP 1 368 715 B1**

(12) **EUROPEAN PATENT SPECIFICATION**

(45) Date of publication and mention
of the grant of the patent:
**21.12.2005 Bulletin 2005/51**

(21) Application number: **02704006.2**

(22) Date of filing: **07.03.2002**

(51) Int Cl.$^7$: **G05D 1/02**

(86) International application number:
**PCT/SE2002/000420**

(87) International publication number:
**WO 2002/075469 (26.09.2002 Gazette 2002/39)**

(54) **METHOD AND DEVICE FOR DETERMINING POSITION OF AN AUTONOMOUS APPARATUS**

VERFAHREN UND EINRICHTUNG ZUR BESTIMMUNG DER POSITION EINER AUTONOMEN VORRICHTUNG

PROCEDE ET APPAREIL DE DETERMINATION DE LA POSITION D'UN APPAREIL AUTONOME

(84) Designated Contracting States:
**AT BE CH CY DE DK ES FI FR GB GR IE IT LI LU MC NL PT SE TR**

(30) Priority: **15.03.2001 SE 0100925**

(43) Date of publication of application:
**10.12.2003 Bulletin 2003/50**

(73) Proprietor: **AKTIEBOLAGET ELECTROLUX**
**105 45 Stockholm (SE)**

(72) Inventor: **HULDEN, Jarl**
**S-169 64 Solna (SE)**

(56) References cited:
**US-A- 4 852 677**     **US-A- 5 156 038**
**US-A- 5 402 365**     **US-A- 5 794 166**

• **BORENSTEIN J ET AL: "MEASUREMENT AND CORRECTION OF SYSTEMATIC ODOMETRY ERRORS IN MOBILE ROBOTS" IEEE TRANSACTIONS ON ROBOTICS AND AUTOMATION, IEEE INC, NEW YORK, US, vol. 12, no. 6, 1 December 1996 (1996-12-01), pages 869-880, XP000690521**

## Description

## TECHNICAL FIELD

The present invention generally relates to autonomous apparatuses, and in particular to devices and methods for improving position determination thereof.

## BACKGROUND

Autonomous apparatuses such as autonomous or robotic vacuum cleaners and other self moving devices are well known in the prior art, for example as disclosed in the International Patent Applications WO 97/41451 (US Patent No. 5,935,179) and WO 00/38028, respectively. Such autonomous surface treatment apparatuses generally have a main body, being supported on or by a number of motor-driven wheels or rollers and means for surface treatment such as rotating brushes in combination with a vacuum cleaning device. Further, a sensing system, usually in combination with transmitters, is provided for guidance, navigation and obstacle detection. The sensing system generally sweeps around the horizon in analogy, for example, with a ship radar. A microprocessor together with appropriate software controls the transmitters and motors of the device. Normally, the microprocessor also receives input data from the wheels and the sensing system for the purpose of position information and localization of wall limitations as well as potential obstacles. This input data is then typically used as the basis for navigating the autonomous apparatus so that it, for instance, will be able to perform a cleaning function or other surface treatment function according to some predetermined strategy and at the same time avoid colliding with different obstacles, which may be arranged in the field of operation, besides avoiding collisions with limitations such as walls or the like.

Typically, an autonomous apparatus orients itself at any time within its permitted motion area defined by a map on the basis of information obtained from the sensing system. Furthermore, the map is typically generated and updated by the autonomous apparatus itself during its movements. It is often vital for the apparatus to obtain an as accurate map as possible, as well as an exact positioning and orientation within the area defined by the map, to be able to perform its operations. Several systems for position determination of autonomous apparatuses have therefore been developed, based on different techniques of prior art. Apparatus contained internal systems such as distance sensors in connection to wheels, have proven to be most cost effective.

The internal position determination systems usually are composed of wheel sensors registering the rotational motion of the wheels. In order to determine how far the apparatus has travelled since previous registration, the information from the wheel rotations is used together with the wheel diameter. This can be done with a reasonable good accuracy when the surface is not too soft, since the effective wheel diameter then can be assumed to be constant. When the surface is slippery or soft, the apparatus may skid and/or the wheels may spin. The calculated travelled distance based on the wheel rotations is then incorrect compared to the actual distance travelled by the apparatus. In order to correct for this slippage, a position calibration method has to be performed. Such a method is disclosed in the US Patent 5,794,166. The method includes prediction of a cumulative overall slippage of the apparatus occurring when the apparatus travels from a starting point to a destination point along an imaginary path. This imaginary path includes a rotation of the apparatus at the starting point by a first rotation angle so that the apparatus is directed towards the destination point. The apparatus then travels forwards from the staring point to the destination point. Finally, a rotation of the apparatus at the destination point is performed that aligns the apparatus with the required rotational position of this point. Furthermore, an overall slippage per wheel based on at least one distance dependent prescribed slippage is calculated. To determine this, the distance between the effective contact points between the two driving wheels and the surface onto which the apparatus is to operate, defined as the "track width" of the autonomous apparatus, must be known. The track width is furthermore utilized for calculating the rotational angle of the autonomous apparatus, as the apparatus moves along the imaginary path.

A problem with the method disclosed in US Patent 5,794,166 is that the actual track width of the autonomous apparatus varies depending on the surface, as well as on the type and direction of the turn. The reason for this is both that the effective contact point varies and that the wheel suspension is not totally rigid. As the effective contact point is displaced during turning of the apparatus, the actual track width will change, and the slippage calculation method in US Patent 5,794, 166 will fail and an erroneous rotation of the apparatus is performed.

Other prior art documents are US patent 4,852,677, which discloses a guiding method for an autonomous traveling vehicle; US patent 5,402,365, which discloses a differential odometer dynamic calibration method and an apparatus therefore; and US patent 5,156,038, which discloses a calibration technique for a vehicle's differential odometer.

A further prior art document is: BORENSTEIN J ET AL: "MEASUREMENT AND CORRECTION OF SYSTEMATIC ODOMETRY ERRORS IN MOBILE ROBOTS" IEEE TRANSACTIONS ON ROBOTICS AND AUTOMATION, IEEE INC, NEW YORK, US, vol. 12, no. 6, 1 December 1996 (1996-12-01), pages 869-880, XP 000690521. This document discloses a calibration method for a positioning device of an autonomous apparatus.

## SUMMARY

An object of the present invention is to provide an accurate position determination method for autonomous apparatuses and devices therefore. Another further object of the present invention is to improve the position determination using a calibration method for calculating an actual track width of the apparatuses and devices therefore.

The above objects are achieved by devices and methods according to the enclosed claims. In general words, an autonomous apparatus is equipped with a position determination device for position determination and localization during its operation. The position device comprises encoders for generating signals corresponding to wheel rotations of the driving wheels. The position change and the heading of the apparatus since the previous recording are obtained from these wheel rotations, in combination with the diameter of the wheels and the track width of the apparatus. The motion of the autonomous apparatus is in the present invention divided up into different driving modes, each one associated with a separate actual track width. Each driving mode is preferably defined in such a way that the track width of the apparatus is substantially constant with that driving mode.

The position determination device further comprises calibration means for calculating the actual track width associated with each one of the driving mode used by the autonomous apparatus. The calibration means in turn comprises means for aligning the apparatus in an initial direction decided by the operator, or an internal or external source. The apparatus is then caused to turn in the driving mode, whose actual track width is to be calculated. As the apparatus is turning, a means determines the total turning angle of the apparatus, based on an external reference or some internal device. Encoders register the corresponding wheel rotations during the turning. Preferably, from the wheel rotation and a temporary track width, an expected turning angle is calculated. A difference between the actual and the expected turning angles is then determined, and the actual track width is calculated as a correction of the temporary track width based on the angle difference.

The major advantages of the present invention come as a result of the division of the operation of the autonomous apparatus into different driving modes, in which the actual track width is substantially constant. This gives a much more accurate and reliable position determination compared to methods according to the prior art, based on one track width.

## BRIEF DESCRIPTION OF THE DRAWINGS

The invention, together with further objects and advantages thereof, will be best understood by reference to the following description taken together with the accompanying drawings, in which:

Fig. 1 illustrates a top view of an embodiment showing a vacuum-cleaning robot equipped according to the present invention;

Fig. 2 is a side view of the autonomous apparatus according to Fig. 1;

Fig. 3 is a front view of the autonomous apparatus according to Fig. 1;

Fig. 4 illustrates a hardware block diagram of the embodiment of Fig. 1;

Fig. 5a, 5b and 5c illustrate different possible ways of defining driving modes of an autonomous apparatus according to the present invention;

Fig. 6a and 6b illustrate the principles of associating the contact points between the wheels and the surface and an actual track width;

Fig. 7 is a detailed view of the hardware block diagram of Fig. 4 illustrating the hardware and the software mainly used by the present invention;

Fig. 8 illustrates a flow diagram of the position determination method of the present invention; and

Fig. 9a and 9b are flow diagrams of the position calibration method of the present invention.

## DETAILED DESCRIPTION

Throughout the drawings, the same reference characters will be used for corresponding or similar elements.

In the following, the invention will be described with reference to a particular example of an autonomous apparatus, namely an autonomous vacuum-cleaning device. It should, however, be understood that the invention is not limited thereto, and that the invention is applicable to various other autonomous apparatuses, such as transport vehicles in manufacturing environments, movable multi-purpose robots and robotic lawnmowers, as well as autonomous surface treatment devices for sweeping, brushing and floor polishing.

In the present disclosure, "speed" refers to the absolute value of "velocity", which has both a magnitude and a direction, i.e. can be either positive or negative.

General features

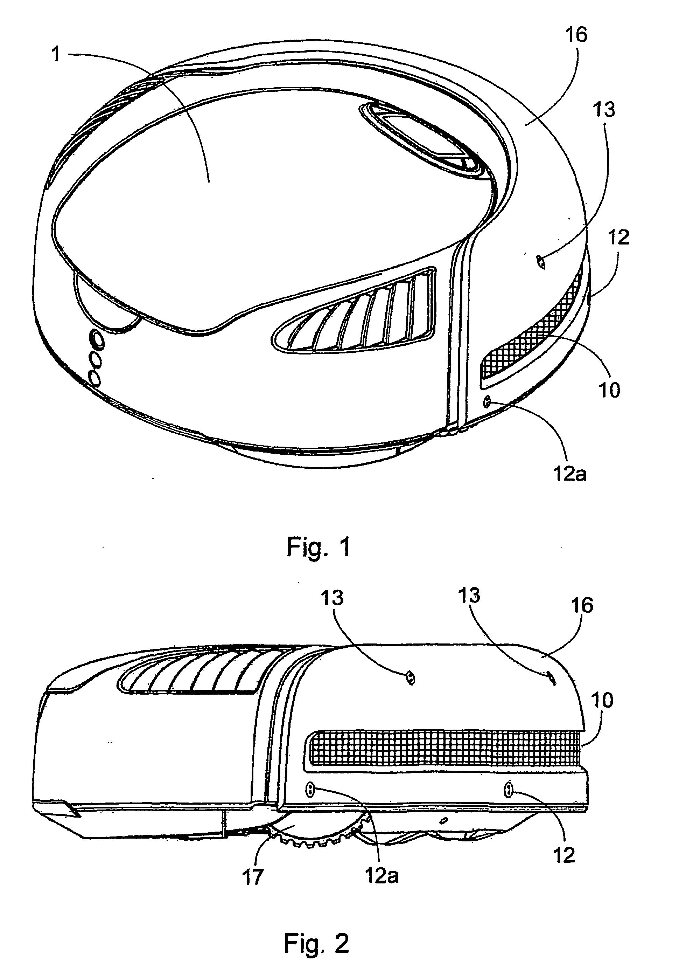

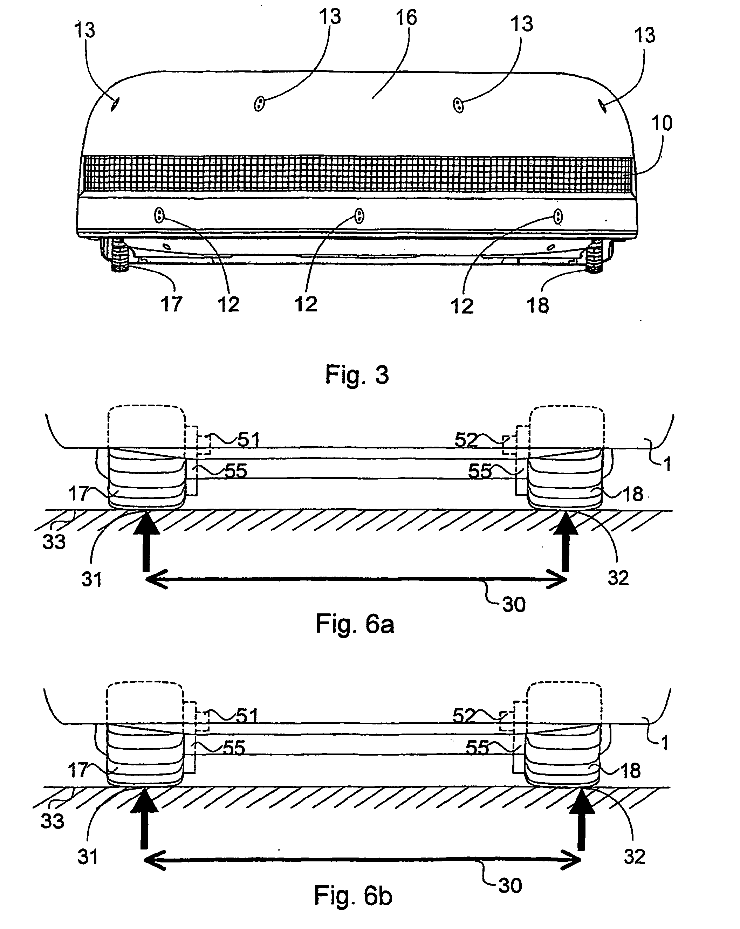

Fig. 1 illustrates in a three-dimensional top view of an illustrative embodiment of an autonomous vacuum-cleaning device 1, which by itself will move on a floor and vacuum-clean a room. In the front portion there is arranged an ultrasonic system. The ultrasonic system comprises a strip-shaped ultrasonic transmitter 10 having a length covering of the order 180° of the front perimeter of the device as illustrated in Figs. 2 and 3. As seen in Fig. 2, the transmitter 10 with strip-shaped elements is mounted above a lower first row of microphone units 12. Above the strip-shaped transmitter elements a second row of microphone units 13 is localized. The ultrasonic echo sensor microphones 12 and 13 together with the transmitter 10 form an ultrasonic sonar system for the navigation of the device. In the illustrative embodiment the transmitter transducer is countersinked in a forward directed, movable bumper unit 16. The bumper 16 controls a left and a right bumper touch sensor, either one being actuated if the bumper makes contact with an obstacle. In Figs. 2 and 3 it will be seen that the device has two diametrically positioned wheels 17, 18. Each wheel 17, 18 is independently driven by a separate motor preferably equipped with a gearbox. The driven wheels 17 and 18 will enable the device to also rotate around its own symmetry center or around either wheel 17, 18. On the axis from each motor, driving the respective wheel 17 and 18, a respective quadrature sensor is mounted. Quadrature signals from the sensors are connected to a built-in microprocessor controlling the device. The signals from these sensors, or equivalent devices will be used for obtaining a dead count for estimating the distance of travel. This is described more in detail below. Optional wheels support the back of the device. The device is generally balanced with a slightly larger weight on the rear half of the device, carrying for instance the batteries, such that it will always move with all wheels in contact with the floor. Due to this balancing the device may easily climb the edges of floor carpets and the like.

Further, the autonomous device may advantageously be equipped with Hall effect sensors, preferably one in front of each wheel, for detection of a magnetic fence and/or one or more magnetic strips in connection with the automatic charging station used for charging the device. The magnetic fence can be used to restrict the movement of the device. For example, the fence can be placed so that device does not fall down the stairs. It can also be placed so as to separate rooms without having to close the door. In this way, it is possible clean one room at a time, which has turned out to be an effective way of cleaning.

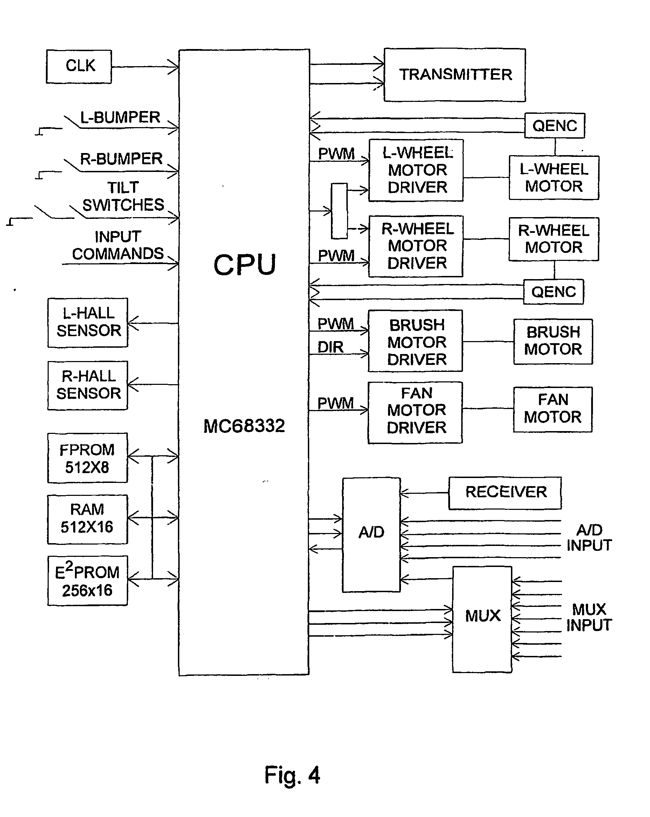

Fig. 4 is a hardware block diagram of the device according to Figs. 1, 2 and 3. The hardware basically consists of a processor board, which is configured to drive the ultrasonic transmitter and the corresponding microphone based receiver system, the fan and brush motors, the two wheel motors, as well as other components of the autonomous vacuum-cleaning device. The processor board is essentially built around a data processor such as the MC68332 from Motorola Inc.

The sonar localization sensing system formed by the transmitter and receiver system is utilized by the autonomous vacuum-cleaning device for obstacle detection purposes, such as detection of obstacles in the path of the moving device, pinpointing the exact location of the nearest obstacle. The processor controls the transmitter and receives input data from the receiver system for subsequent evaluation.

The processor also controls the motor for the rotating brush as well as the motor for the fan, wherein the fan generates the necessary vacuum for the general function of the vacuum cleaner. Air from the fan motor is additionally in a known manner utilized for cooling purposes and the air is exhausted at a gilled outlet at the top of the device.

The processor is controlled by software stored in a number of different types of digital memories for example of type FPROM, RAM or EEPROM, which are all well known to a person familiar to computer techniques. Additionally the processor has its own clocking system CLK also known from the prior art.

The system as illustrated in Fig. 4 further comprises a number of switches, two bumper switches and two tilt switches. The two bumper switches L-Bumper, R-Bumper are connected to two TPU input pins working in discrete I/O mode, and are used as a complement to the sonar system for detection of collisions with obstacles. The tilt switches are used to detect whether the device is leveled with the floor or tilted.

The system also includes a number of switches for input commands from a control panel. For example, this enables the user to turn the vacuum cleaner on and off, and to select one of a number of cleaning programs.

Signals representative of the magnetic fields that are sensed by the Hall sensors are fed to the processor via the A/D-converter and processed thereby to allow detection of the automatic charging station and the magnetic fence. The offset voltages of the analogue Hall sensors may vary with time, temperature and individual sensors, and therefore a zero field reference point is constantly recalculated with a slow averaging filter and adjusted based on pulse width modulated signals from the processor.

In order to detect malfunctions, various signals are continuously measured and fed to the processor for evaluation, either directly via the A/D-converter or first through the multiplexer MUX and then via the A/D-converter.

The wheel motors for driving the apparatus are separately controlled by pulse-width modulated signals of 5 kHz generated by two more channels from the Time Processor Unit in the main processor. In order to detect how much each wheel has rotated, the quadrature encoders mounted in connection with the wheels generate quadrature signals that are connected to Time Processor Unit (TPU) inputs of the MC68332. The quadrature signals are processed by the processor to provide position information by keeping track of the distance of travel and preferably also the rotation of the autonomous device during movement, which will be described in more detail below.

## Position determination

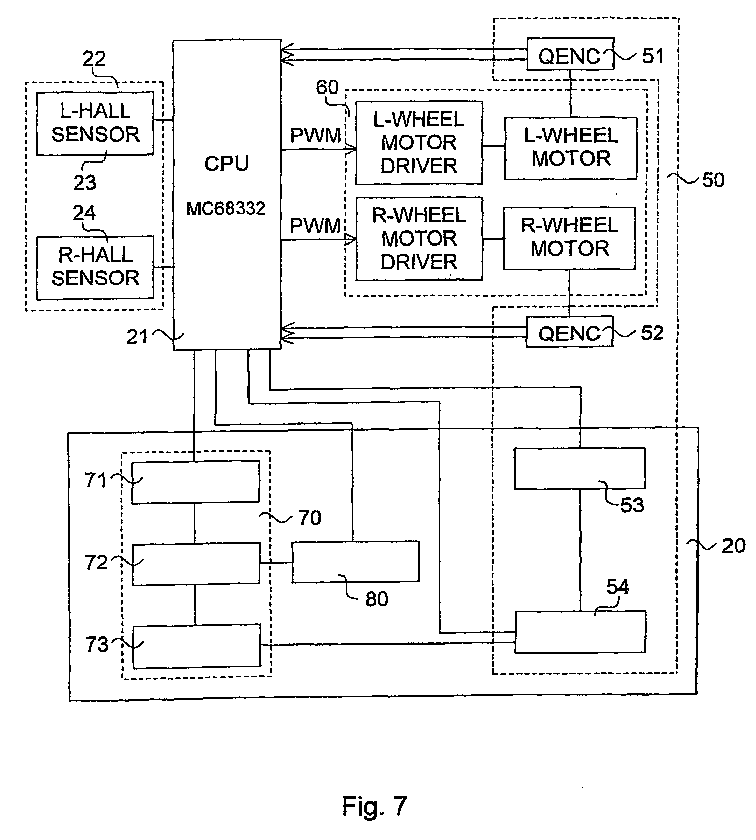

In Fig. 6a, a position determination of the autonomous apparatus 1 according to the present invention is performed using signals from encoders 51, 52 located in connection to the driving wheels 17, 18. These encoders 51, 52 register the rotation of respective wheel 17, 18 and the signals are then outputted to a microprocessor. The microprocessor calculates the position change of the apparatus 1 since previous registration by combining the wheel rotation signals with information of the wheel diameters. In a first embodiment of the present invention the encoders 51, 52 are made of Hall sensors generating a quadrature signal in response to rotation of a magnetic disc 55 mounted in connection with the wheels 17, 18. The magnetic discs 55 are discs divided up into a number of sectors with different magnetic directions. As the discs 55 rotate the encoders 51, 52 register the change in magnetism and can thereby measure the rotation of respective wheel 17, 18. Other embodiments are possible, such as slotted disc encoders and related devices.

The signals from the encoders 51, 52 are not only used for determining travelled distances but also for calculating the heading of the apparatus 1 during its movement. Turning of the autonomous apparatus is given by:

$$\Delta\alpha = \frac{DistRight - DistLeft}{TrackWidt} * \frac{180}{\pi} \qquad (1)$$

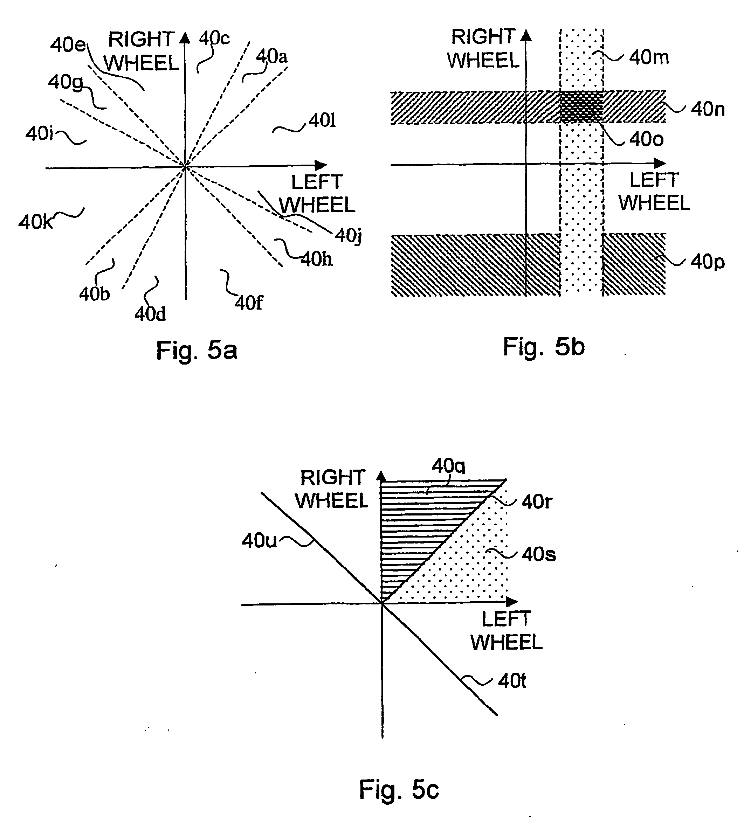

where $\Delta\alpha$ is the turning angle in degrees of the apparatus 1 since previous position, DistRight and DistLeft is the distance traveled by the right and the left wheel, respectively, and TrackWidth is the actual track width 30 of the apparatus 1. Thus, to determine the heading of the apparatus 1, in addition to the wheel rotation signals, the actual track width 30 is needed. The problem is that the track width 30 of the autonomous apparatus 1 varies depending on the surface, as well as on the type and direction of the turn. The motion of the apparatus 1 is therefore in the present invention separated into different driving modes, in which the track width 30 is substantially constant or only varies between acceptable limits. Figs. 5a, 5b and 5c illustrate how such driving modes 40a-40u are defined by the rotation velocities of the driving wheels 17, 18. In respective Fig., a coordinate system, in which the x-axis represents rotation velocity of the left wheel and rotation velocity of the right wheel is represented by the y-axis, is illustrated. Which wheel is defined as the left wheel or the right wheel does not matter as long as the definition is used consistently throughout the entire procedure, i.e. there is no risk for mix-up between the two wheels.

In the embodiment of the present invention illustrated in Fig. 5a, the driving modes 40a-40l are defined by a respective range of ratios between the rotation velocities:

$$A \leq \frac{VelRightWheel}{VelLeftWheel} \leq B \qquad (2)$$

where VelRightWheel and VelLeftWheel are the velocities of the two driving wheels 17, 18, respectively, and A and B are the limits, within which the quotient associated with the driving mode 40a-40l is to be defined. This way of defining driving modes divides the coordinate system into sectors, such as 40a in Fig. 5a. The quotient will be the same if the magnitudes of the velocities of the two wheels are the same but the directions are different. If the ratio is the single defining parameter, driving forwards with both wheels and driving backwards with the same rotation speed of respective wheel are also defined, in this embodiment, as the same driving mode. In Fig. 5a, sectors 40a and 40b are e.g. then associated with the same driving mode. However, additional defining parameters, such as the sign of one of the velocities, may also be used. The sectors 40a and 40b may then constitute separate driving modes.

Fig. 5b illustrates another embodiment for defining driving modes 40m-40p of the present invention. The driving modes 40m-40p are defined in that the rotation velocity of one or both wheels is within a predetermined velocity range. The rotation velocities are, thus, limited by an upper rotation velocity limit and/or a lower rotation velocity limit. This can be applied for each wheel independently, 40m or 40n, or simultaneously for both wheels 40o. In the latter case a more precise division of driving modes is obtained. For some operations it may, however, be sufficient to base the driving mode definition on the rotation velocity of only one wheel. The driving mode 40p illustrates the use of indefinite velocity range.

The driving modes illustrated in Fig. 5b should only be interpreted as examples of possible driving modes. In a preferred embodiment, the driving modes should be complementary and together cover all allowed motion patterns.

Fig. 5c illustrates yet another embodiment for defining the driving modes 40q-40u of the present invention, which today is considered as the most preferred embodiment. This definition divides the driving operation of the apparatus 1 into five driving modes, of which three 40r, 40t, 40u correspond to distinct velocity ratios and two 40q, 40s correspond to ranges of rotation velocity ratios. 40r is the driving mode used for forward travel, where the rotation velocities of the two driving wheels 17, 18 are the same. Here, any associated actual track width may be used, since the apparatus, at least ideally, does not turn. A compensation for unintentional turns may, however, optionally be present. 40t and 40u illustrate driving modes turning the apparatus around its own axis on the spot in a respective direction. The magnitudes of the rotation velocities of the wheels are the same but the directions of rotation are opposite, in 40u the right wheel is rotating forwards whereas the left wheel is rotating backwards. The opposite is true for 40t, where the left rotates forwards and the right wheel rotates backwards. In order to turn while driving forwards, the two driving modes 40q and 40s are needed. 40q represents a mode involving turning the apparatus to the left and 40s represents a mode turning the apparatus to the right. In the former driving mode, 40q, the right wheel is rotating forwards either alone or in combination with forward rotation of the left wheel. The rotation speed of the left wheel has, though, to be lower than the rotation speed of the right wheel. The same is true for 40s except that it is the left wheel that rotates alone or faster than the right wheel. In this definition of driving modes, the apparatus is never allowed to move backwards. It instead turns on the spot and then moves forwards. Its movement is, thus, limited to the five different driving modes, which are sufficient to cover the allowed motions used during operation of the autonomous apparatus 1. A backward motion may, however, be used at special occasions, e.g. when the apparatus encounters an obstacle or a magnetic fence. If such motion is used, it is then preferably straight, whereby there is no track width dependence.

The motion of the autonomous apparatus 1 is, as mentioned above, generally divided up into different driving modes 40a- 40u, in which the track width 30 may be considered as substantially constant. Figs. 6a and 6b illuminate the need for this division.

Referring to Fig. 6a, this is a view of principle of the lower part of an autonomous apparatus 1 showing the effective contact points 31, 32 between the driving wheels 17, 18 and a surface 33, when the apparatus is driving, forwards with the same rotation speed on both driving wheels. The effective contact points 31, 32 of respective wheel are typically, in this driving mode, located in the center of the parts of the lateral areas of the wheels 17, 18 that are in contact with the surface 33, as illustrated in Fig. 6a. These effective contact points 31, 32 define the actual track width 30 of the apparatus.

In Fig. 6b, the actual track width 30 in a different driving mode is shown. In this driving mode the apparatus is turning right while driving. The effective contact point 32 of the driving wheel in the direction of the turn, i.e. the right wheel 18, is displaced from the center of the lateral area as in Fig. 6a towards the side facing the turning direction. This displacement of contact points changes the actual track width 30 of the apparatus, resulting in a noticeably different track width compared to the driving mode associated with Fig. 6a.

Figs. 6a and 6b should merely be viewed as illustrative examples showing the dependence of the track width 30 upon the driving mode of the apparatus 1. The actual track width 30 and the effective contact points 31, 32 will change further at other driving modes but the spirit of the driving mode concept should be clear from the Figs 6a and 6b.

Fig. 7 illustrates a part of the hardware block diagram of Fig. 4 in more detail, omitting the parts not directly used for position determination purposes. In order to move the autonomous apparatus 1, pulse-width modulated signals (PWM) are outputted from the Time Processor Unit in the microprocessor 21. These PWM signals control the applied voltage to respective driving motor and thereby control the rotation speed and direction of respective wheel. As mentioned above, encoders 51, 52 register the wheel positions, generating quadrature signals that are forwarded to the microprocessor 21, and corresponding velocities are determined. In order to determine the position change of the apparatus 1 since previous recording the actual track width 30 and the driving mode 40 of the apparatus 1 have to be determined. In the digital memories 20, software used for position determination, is stored. Based on the wheel positions, encoded in the quadrature signals, determination means 54 in the digital memories 20 determines the present driving mode 40 of the apparatus 1 by use of wheel rotation velocities. From this driving mode 40 the associated actual track width 30 is obtained, which is used in the subsequent position calculations.

Before the actual position calculations it has to be determined which track width to use. The driving mode and therefore also the definition of driving modes have to be known. It might be, from operational point of view, most suitably to have several different definitions of driving modes, such as some of the definitions of Figs. 5a, 5b and 5c. The operator can then switch between definitions of different sets of driving modes when i.e. the surface changes or when the autonomous apparatus is to perform a new operation where the former driving mode definition is not perfectly representative. Whichever driving mode definition used, the actual track width has to be determined and associated to each driving mode. This is in the present invention preferably performed by a calibration method, which is described further below.

Once the actual track width is known, the position change is calculated by calculation means 53 stored in the digital memories 20, which are loaded and executed in the microprocessor 21. The travelled distance is calculated using the wheel rotations and the diameter of respective wheel, whereas the heading is given by equation (1). By starting in an initial well defined position and calculating the position change at some intervals as the apparatus moves, and storing this information in the digital memories, the apparatus may keep track of its movement during its operation and thus of its present location. This information is used by e.g. surface treatment autonomous apparatuses together with a map over the area of operation, to know which parts of the operation area that have been treated and which parts that are untreated.

In order to determine the actual track width 30 of respective driving mode 40a-40u, a position calibration means of the present invention is preferably used. Firstly aligning means 22 aligns the autonomous apparatus 1 in an initial direction. The aligning means 22 controls the driving means 60 via the PWM signals from the microprocessor 21 so that the apparatus 1 turns and possibly also moves to face a direction selected by the aligning means 22. The aligning means 22 could preferably comprise magnetic detectors 23, 24, e.g. Hall sensors, detecting a magnetic field that is provided to direct the apparatus 1 in the correct direction. The magnetic field may originate from magnetic stripes or other magnetic sources, such as the magnetic fence and/or one or more of the magnetic strips in connection with the automatic charging station mentioned above. Other embodiments are also possible; the aligning means 22 may comprise push buttons that the operator pushes when the apparatus 1 is to calculate the track width 30. The initial direction may then be the direction the apparatus is facing when the button is pushed so no turning before the actual calibration is necessary. Alternatively, an external signal from some source may trigger the calibration method and the aligning means 22 then comprises a receiver, sensitive to the external signal.

Once the apparatus 1 has been aligned in the initial direction, the microprocessor 21 sends PWM signals to the driving means 60. The driving means 60, in turn, causes the apparatus 1 to turn in the driving mode 40a-40u associated with the actual track width 30 to be determined. If the apparatus moves according to the driving mode 40r in Fig. 5c, it is actually moving straight ahead, i.e. not turning. In this driving mode 40r, the actual track width 30 is in fact arbitrary, e.g. given by the distance between the wheels and no calibration is necessary. On the other hand, for other possible driving modes an actual calculation is necessary to obtain the correct track width. The actual total turning angle of the apparatus, during the turning in the selected driving mode, is then determined by reference means 80. The reference means 80 uses some internal or external reference for obtaining the actual turning angle. Gyros, sensitive to changes in travelling direction, could be used as an internal reference for calculating the total turning angle of the apparatus 1. External references could be a magnetic field sensed by the magnetic detectors 23, 24 in the aligning means 22 or other magnetic detectors. Just as for the initial aligning other external signals, such as a signal beacon or another source somewhere in the area of operation, may be used as a stationary reference. Doing the turning in the selected driving mode, the angle relative the reference changes and the reference means 80 can thereby calculate the total turning angle of the apparatus. The apparatus may preferably turn a predetermined total turning angle, which e.g. could be determined by the operator. The wheel rotations corresponding to this turning, predetermined or not, are simultaneously registered by the encoders 51, 52. By using the wheel rotations and the total turning angle, the actual track width 30 of the driving mode 40a- 40u can be calculated by means of a calculation means 70. From the wheel rotations, an expected total turning angle of the apparatus is preferably calculated in an expectation means 71, based on a temporary track width. This temporary track width may be the track width used during driving straight forward, 40r in Fig. 5c, the nominal track width or a previously calculated track width. Difference means 72 calculates a possible difference between the actual total turning angle, determined by the reference means 80, and the expected turning angle, obtained from the expectation means 71. Based on this difference, a correction of the temporary track width is determined by correction means 73. The temporary track width is, thus, calibrated to correspond to the actual track width 30 of the apparatus 1.

It is also possible to calibrate the apparatus by rotating the wheels a predetermined number of rotations and simply registering the corresponding actual turning angle. Similar calculations as above are used to obtain the correct actual turning angle of the apparatus.

The track widths may, using the method above, be calculated for all possible driving modes at one instance, e.g. at the start of the operation. The information of the driving modes and associated track widths may then be stored in the digital memories 20 of the autonomous apparatus 1. As the driving mode changes during the operation, the respective stored actual track width is used for position determination. This stored data can be used for longer-term operations so that calculations are only performed if a new, until now not used, driving mode is encountered, and not every time the apparatus is started. Another possibility is to calculate the track width as the apparatus changes driving mode. In this way the calibration method has to be performed at least once for every new driving. The information may be stored in the memories 20 for later uses. However, preferably the calibration is performed regularly or when there are indications of changes in motion conditions.

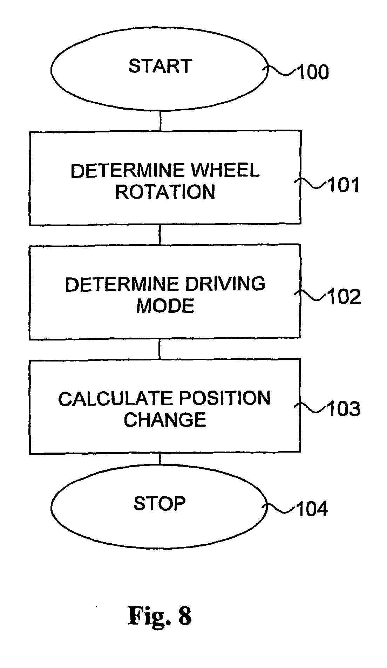

Fig. 8 illustrates a schematic flow diagram of the position determination method of the present invention. The method starts in step 100. In step 101, a wheel rotation is determined for the two driving wheels. A driving mode is then in step 102 determined, based on the wheel rotations. In step 103, the position change since previous calculation is calculated, based on an actual track width, associated with the driving mode. Finally, the position determination method is completed in step 104.

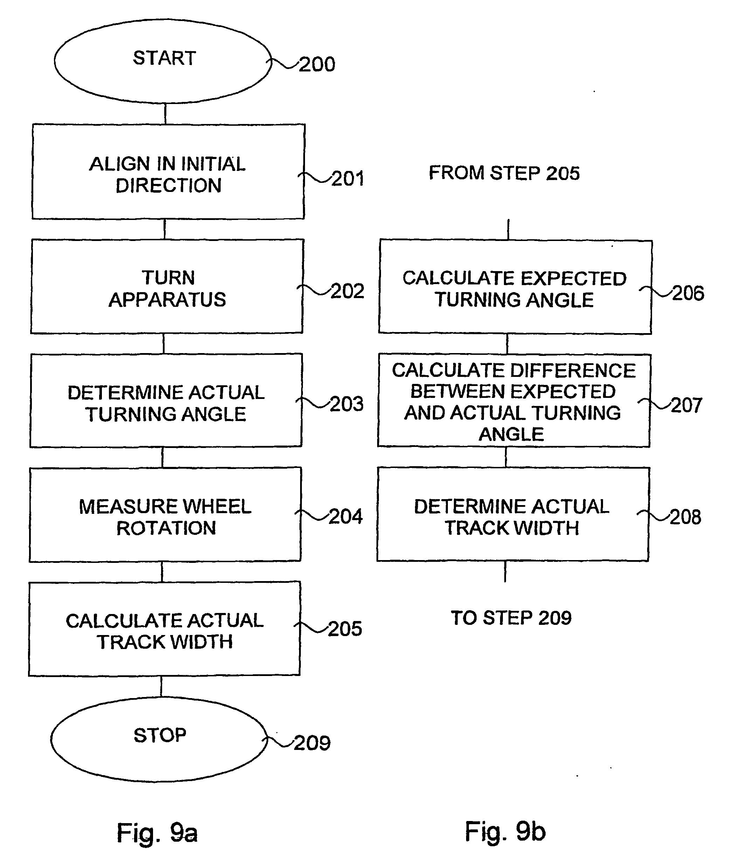

The calibration method of the present invention is briefly described in Figs. 9a and 9b. The calibration procedure starts in step 200. In step 201, the apparatus is aligned in the initial direction, decided by the operator or some external or internal input. The apparatus is then in step 202 caused to turn, in the driving mode associated with the actual track width to be calculated. The actual turning angle is determined in step 203, using an external reference or an internal means. In step 204, the corresponding wheel rotations are registered preferably by encoders in connection with respective wheel. The actual track width of the present driving mode is calculated in step 205, before the method is completed in step 209.

Fig. 9b describes a preferred manner to accomplish the calculation step 205 in more detail. In step 206, an expected total turning angle is calculated based on the wheel rotations and a temporary track width. The calculation continues in step 207, where a difference between the actual and the expected total turning angles is determined. In step 208, the actual track width is calculated as a correction of the temporary track width using the difference in step 207. Finally the method is ended in step 209.

## Claims

1. A position determination method for an autonomous apparatus (1), comprising the steps of:

   determining a wheel rotation of a first (17) and a second (18) wheel, respectively; and calculating a position change based on said first and second wheel rotations and a track width (30), **characterized by** the further step of:

   determining a driving mode (40a-40u) based on said wheel rotations, whereby said calculating step is based on an actual track width (30) associated with said driving mode (40a-40u), wherein the motion of the autonomous apparatus is divided into different driving modes in each of which an associated track width is substantially constant.

2. The method according to claim 1, **characterized in that** said driving mode (40a-40u) is defined by means of rotation velocities of said first (17) and said second (18) wheels.

3. The method according to claim 2, **characterized in that** said driving mode (40a-401, 40q, 40s) is defined by a range of ratios between said rotation velocities.

4. The method according to claim 2, **characterized in that** said driving mode (40m-40p) is defined **in that** said rotation velocity of said first wheel (17) is within a predetermined first velocity range.

5. The method according to claims 2 or 4, **characterized in that** said driving mode (40m-40p) is defined **in that** said rotation velocity of said second wheel (18) is within a predetermined second velocity range.

6. The method according to claim 2, **characterized by** five driving modes (40q-40u) defined by:

   forward rotation of said first wheel (17) and forward rotation of said second wheel (18) with equal rotation velocities;
   forward rotation of said first wheel (17) and backward rotation of said second wheel (18) with equal rotation speed;
   backward rotation of said first wheel (17) and forward rotation of said second wheel (18) with equal rotation speed;
   forward rotation of said first wheel (17) either alone or in combination with forward movement of said second wheel (18), where the rotation speed of said second wheel (18) is lower than the rotation speed of said first wheel (17); and
   forward rotation of said second wheel (18) either alone or in combination with forward movement of said first wheel (17), where the rotation speed of said first wheel (17) is lower than the rotation speed of said second wheel (18).

7. A calibration method for a positioning device (50) of an autonomous apparatus (1), **characterized by** the steps of:

   aligning said autonomous apparatus (1) in an initial direction;
   turning said autonomous apparatus (1) in one of a number of driving modes (40a40u);
   determining an actual total turning angle of said autonomous apparatus (1);
   measuring a wheel rotation of a first (17) and a second (18) wheel, respectively; and
   calculating an actual track width (30) associated with each one of the driving modes (40a-40u) based on said measured wheel rotations and said determined actual total turning angle, wherein the motion of the autonomous apparatus is divided into said different driving modes in each of which an associated track width is substantially constant.

8. The method according to claim 7, **characterized in that** said calculating step in turn comprises the steps of:

   calculating an expected total turning angle of said autonomous apparatus (1) based on said measured wheel rotations and a temporary track width;
   calculating a difference between said expected and said actual turning angles of said autonomous apparatus (1); and
   determining said actual track width (30) as a correction of said temporary track width based on said difference.

9. The method according to claims 7 or 8, **characterized in that** said driving modes (40a-40u) are defined by means of rotation velocities of said first (17) and said second (18) wheels.

10. The method according to claim 9, **characterized in that** said driving modes (40a-401, 40q, 40s) are defined by a range of ratios between said rotation velocities.

11. The method according to claim 9, **characterized in that** at least one of said driving modes (40m-40p) is defined **in that** said rotation velocity of said first wheel (17) is within a predetermined first velocity range.

12. The method according to claims 9 or 11, **characterized in that** at least one of said driving modes (40m-40p) is defined **in that** said rotation velocity of said second wheel (18) is within a predetermined second velocity range.

13. The method according to claim 9, **characterized by** five driving modes (40q-40u) defined by:

   forward rotation of said first wheel (17) and forward rotation of said second wheel (18) with equal rotation velocities;
   forward rotation of said first wheel (17) and backward rotation of said second wheel (18) with equal rotation speed;
   backward rotation of said first wheel (17) and forward rotation of said second wheel (18) with equal rotation speed;
   forward rotation of said first wheel (17) either alone or in combination with forward movement of said second wheel (18), where the rotation speed of said second wheel (18) is lower than the rotation speed of said first wheel (17); and forward rotation of said second wheel (18) either alone or in combination with forward movement of said first wheel (17), where the rotation speed of said first wheel (17) is lower than the rotation speed of said second wheel (18).

14. The method according to any of the claims 7 to 13, **characterized in that** said actual turning angle determining step in turn comprises the step of:

   utilizing an operator input or an external input.

15. The method according to claim 14, **characterized in that** said external input is a signal generated by detection of a magnetic field.

16. A position determining device (50) of an autonomous apparatus (1) comprising:

   means (51, 52) for determining a wheel rotation of a first (17) and a second (18) wheel, respectively; and
   means (53) for calculating a position change based-on said first and second wheel rotations and a track width (30), said calculation means being connected to said means (51, 52) for measuring said wheel rotations, **characterized by**
   means (54) for determining a driving mode (40a-40u) based on said wheel rotations connected to said calculation means (53), whereby said calculation means 53 is arranged to base said calculation on an actual track width (30) associated with said driving mode (40), wherein the motion of the autonomous apparatus is divided into different driving modes in each of which an associated track width is substantially constant.

17. The device according to claim 16, **characterized in that** said driving mode (40a-40u) is defined by means of rotation velocities of said first (17) and said second (18) wheels.

18. The device according to claim 17, **characterized in that** said driving mode (40a-40l, 40q, 40s) is defined by a range of ratios between said rotation velocities.

19. The device according to claim 17, **characterized in that** said driving mode (40m-40p) is defined **in that** said rotation velocity of said first wheel (17) is within a predetermined first velocity range.

20. The device according to claims 17 or 19, **characterized in that** said driving mode (40m-40p) is defined **in that** said rotation velocity of said second wheel (18) is within a predetermined second velocity range.

21. The device according to claim 17, **characterized by** five driving modes (40q-40u) defined by:

   forward rotation of said first wheel (17) and forward rotation of said second wheel (18) with equal rotation velocities;
   forward rotation of said first wheel (17) and backward rotation of said second wheel (18) with equal rotation speed;
   backward rotation of said first wheel (17) and forward rotation of said second wheel (18) with equal rotation speed;
   forward rotation of said first wheel (17) either alone or in combination with forward movement of said second wheel (18), where the rotation speed of said second wheel (18) is lower than the rotation speed of said first wheel (17); and forward rotation of said second wheel (18) either alone or in combination with forward movement of said first wheel (17), where the rotation speed of said first wheel (17) is lower than the rotation speed of said second wheel (18).

22. The device according to any of the claims 16 to 21, **characterized by** position calibration means in turn comprising:

> means (22) for aligning said autonomous apparatus (1) in an initial direction;
> means (21) for causing driving means (60) to turn said autonomous apparatus (1) in a first of a number of driving modes (40a-40u);
> means (80) for determining an actual total turning angle of said autonomous apparatus (1);
> first calculation means (70) for calculating said actual track width (30) associated with said first driving mode (40a-40u) based on said measured wheel rotations and said determined actual total turning angle.

23. The means according to claim 22, **characterized in that** said first calculation means (70) in turn comprises:

> second calculation means (71) for calculating an expected total turning angle of said autonomous apparatus (1) based on said measured wheel rotations and a temporary track width;
> third calculation means (72) for calculating a difference between said expected and said actual turning angles of said autonomous apparatus (1); and
> means (73) for determining said actual track width (30) as a correction of said temporary track width based on said difference.

24. A position calibration means of an autonomous apparatus, **characterized by**

> means (22) for aligning said autonomous apparatus (1) in an initial direction;
> means (21) for causing driving means (60) to turn said autonomous apparatus (1) in one of a number of driving modes (40a-40u);
> means (80) for determining an actual turning angle of said autonomous apparatus (1);
> means (51, 52) for measuring a wheel rotation of a first wheel (17) and a second wheel (18), respectively; and
> first calculation means (70) for calculating an actual track width (30) associated with each one of the driving modes (40a-40u) based on said measured wheel rotations and said determined actual total turning angle, said first calculation means (70) being connected to said means (80) for determining said actual turning angle and said means (51, 52) for measuring said wheel rotations, wherein the motion of the autonomous apparatus is divided into said different during modes in each of which an associated track width is substantially constant.

25. The means according to claim 24, **characterized in that** said first calculation means (70) in turn comprises:

> second calculation means (71) for calculating an expected total turning angle of said autonomous apparatus (1) based on said measured wheel rotations and a temporary track width;
> third calculation means (72) for calculating a difference between said expected and said actual turning angles of said autonomous apparatus (1); and
> means (73) for determining said actual track width (30) as a correction of said temporary track width based on said difference.

26. The means according to claims 24 or 25, **characterized in that** driving modes (40a-40u) are defined by means of rotation velocities of said first (17) and said second (18) wheels.

27. The means according to claim 26, **characterized in that** said driving modes (40a-40l, 40q, 40s) are defined by a range of ratios between said rotation velocities.

28. The means according to claim 26, **characterized in that** at least one of said of driving modes (40m-40p) is defined **in that** said rotation velocity of said first wheel (17) is within a predetermined first velocity range.

29. The means according to claims 26 or 28, **characterized in that** at least one of said of driving modes (40m-40p) is defined **in that** said rotation velocity of said second wheel (18) is within a predetermined second velocity range.

30. The means according to claim 26, **characterized by** five driving modes (40q-40u) defined by:

> forward rotation of said first wheel (17) and forward rotation of said second wheel (18) with equal rotation velocities;
> forward rotation of said first wheel (17) and backward rotation of said second wheel (18) with equal rotation speed;
> backward rotation of said first wheel (17) and forward rotation of said second wheel (18) with equal rotation speed;
> forward rotation of said first wheel (17) either alone or in combination with forward movement of said second wheel (18), where the rotation speed of said second wheel (18) is lower than the rotation speed of said first wheel (17); and forward rotation of said second wheel (18) either alone or in combination with forward movement of said first wheel (17), where the rotation speed of said first wheel (17) is lower than the rotation speed of said second wheel (18).

31. The means according to any of the claims 24 to 30, **characterized in that** said means (22) determining said actual total turning angle of said autonomous apparatus in turn comprises operator input or external input means.

32. The means according to claim 31, **characterized in that** said external input means is a magnetic field detector.

33. The means according to claim 32, **characterized in that** said magnetic field detector is a Hall sensor (23, 24).

**Patentansprüche**

1. Verfahren zur Positionsbestimmung für ein selbständig arbeitendes Gerät (1), welches die Schritte umfasst:

    Ermittlung der Drehung eines ersten (17) bzw. eines zweiten (18) Rades; und

    Berechnung der Positionsänderung auf der Grundlage der Drehung des ersten und des zweiten Rades und der Spurweite (30), **gekennzeichnet durch** den weiteren Schritt:

    Ermittlung eines Fahrmodus (40a-40u) auf der Grundlage der genannten Raddrehungen, wobei genannter Berechnungsschritt auf der Grundlage der tatsächlich vorliegenden Spurweite (30) in Verbindung mit dem genannten Fahrmodus (40a-40u) erfolgt und wobei die Bewegung des selbständig arbeitenden Gerätes in unterschiedliche Fahrmodi unterteilt ist, von denen jeder einzelne mit einer Spurweite verknüpft ist, welche im Wesentlichen konstant ist.

2. Verfahren gemäß Anspruch 1, **dadurch gekennzeichnet, dass** der genannte Fahrmodus (40a-40u) mittels der Drehgeschwindigkeiten des genannten ersten (17) und des genannten zweiten (18) Rades festgelegt wird.

3. Verfahren gemäß Anspruch 2, **dadurch gekennzeichnet, dass** der genannte Fahrmodus (40a-401, 40q, 40s) durch einen gewissen Bereich von Verhältnissen zwischen den genannten Drehgeschwindigkeiten festgelegt wird.

4. Verfahren gemäß Anspruch 2, **dadurch gekennzeichnet, dass** der genannte Fahrmodus (40m-40p) **dadurch** festgelegt wird, dass die genannte Drehgeschwindigkeit des genannten ersten Rades (17) innerhalb eines vorher festgelegten ersten Geschwindigkeitsbereiches liegt.

5. Verfahren gemäß Anspruch 2 oder 4, **dadurch gekennzeichnet, dass** der genannte Fahrmodus (40m-40p) **dadurch** festgelegt wird, dass die genannte Drehgeschwindigkeit des genannten zweiten Rades (18) innerhalb eines vorher festgelegten zweiten Geschwindigkeitsbereiches liegt.

6. Verfahren gemäß Anspruch 2, **gekennzeichnet durch** fünf Fahrmodi (40q-40u), welche festgelegt sind **durch**:

    Vorwärtsdrehung des genannten ersten Rades (17) und Vorwärtsdrehung des genannten zweiten Rades (18) mit gleichen Drehgeschwindigkeiten;

    Vorwärtsdrehung des genannten ersten Rades (17) und Rückwärtsdrehung des genannten zweiten Rades (18) mit gleicher Drehzahl;

    Rückwärtsdrehung des genannten ersten Rades (17) und Vorwärtsdrehung des genannten zweiten Rades (18) mit gleicher Drehzahl;

    Vorwärtsdrehung des genannten ersten Rades (17) entweder allein oder in Verbindung mit der Vorwärtsbewegung des genannten zweiten Rades (18), wobei die Drehzahl des genannten zweiten Rades (18) niedriger ist als die Drehzahl des genannten ersten Rades (17); und Vorwärtsdrehung des genannten zweiten Rades (18) entweder allein oder in Verbindung mit der Vorwärtsbewegung des genannten ersten Rades (17), wobei die Drehzahl des genannten ersten Rades (17) niedriger ist als die Drehzahl des genannten zweiten Rades (18).

7. Kalibrierverfahren für die Positionierungsvorrichtung (50) eines selbständig arbeitenden Gerätes (1), **gekennzeichnet durch** die Schritte:

    Ausrichtung des genannten selbständig arbeitenden Gerätes (1) in eine Ausgangsrichtung;

    Versetzen des genannten selbständig arbeitenden Gerätes (1) in einen bestimmten Fahrmodus aus einer Anzahl von Fahrmodi (40a-40u);

Ermittlung des tatsächlich vorliegenden Gesamtlenkwinkels des genannten selbständig arbeitenden Gerätes (1);

Messung einer Drehung eines ersten (17) bzw. eines zweiten (18) Rades; und

Berechnung der tatsächlich vorliegenden Spurweite (30) im Zusammenhang mit jedem einzelnen der Fahrmodi (40a-40u) auf der Grundlage der genannten gemessenen Raddrehungen und des genannten ermittelten tatsächlich vorliegenden Gesamtlenkwinkels, wobei die Bewegung des selbständig arbeitenden Gerätes in unterschiedliche Fahrmodi unterteilt ist, von denen jeder einzelne mit einer Spurweite verknüpft ist, welche im Wesentlichen konstant ist.

8. Verfahren gemäß Anspruch 7, **dadurch gekennzeichnet, dass** der genannte Berechnungsschritt seinerseits die Schritte umfasst:

Berechnung eines zu erwartenden Gesamtlenkwinkels des genannten selbständig arbeitenden Gerätes (1) auf der Grundlage der genannten gemessenen Raddrehungen und einer vorläufigen Spurweite;

Berechnung der Differenz zwischen dem genannten zu erwartenden und dem genannten tatsächlichen Lenkwinkel des selbständig arbeitenden Gerätes (1); und

Ermittlung der genannten tatsächlich vorliegenden Spurweite (30) als Korrektur der genannten vorläufigen Spurweite auf der Grundlage der genannten Differenz.

9. Verfahren gemäß Anspruch 7 oder 8, **dadurch gekennzeichnet, dass** die genannten Fahrmodi (40a-40u) mittels der Drehgeschwindigkeiten des genannten ersten (17) und des genannten zweiten (18) Rades festgelegt werden.

10. Verfahren gemäß Anspruch 9, **dadurch gekennzeichnet, dass** die genannten Fahrmodi (40a-40l, 40q, 40s) durch einen gewissen Bereich von Verhältnissen zwischen den genannten Drehgeschwindigkeiten festgelegt werden.

11. Verfahren gemäß Anspruch 9, **dadurch gekennzeichnet, dass** mindestens einer der genannten Fahrmodi (40m-40p) **dadurch** festgelegt wird, dass die genannte Drehgeschwindigkeit des genannten ersten Rades (17) innerhalb eines vorher festgelegten ersten Geschwindigkeitsbereiches liegt.

12. Verfahren gemäß Anspruch 9 oder 11, **dadurch gekennzeichnet, dass** mindestens einer der genannten Fahrmodi (40m-40p) **dadurch** festgelegt wird, dass die genannte Drehgeschwindigkeit des genannten zweiten Rades (18) innerhalb eines vorher festgelegten zweiten Geschwindigkeitsbereiches liegt.

13. Verfahren gemäß Anspruch 9, welches **gekennzeichnet ist durch** fünf Fahrmodi (40q-40u), welche festgelegt sind **durch**:

Vorwärtsdrehung des genannten ersten Rades (17) und Vorwärtsdrehung des genannten zweiten Rades (18) mit gleichen Drehgeschwindigkeiten;

Vorwärtsdrehung des genannten ersten Rades (17) und Rückwärtsdrehung des genannten zweiten Rades (18) mit gleicher Drehzahl;

Rückwärtsdrehung des genannten ersten Rades (17) und Vorwärtsdrehung des genannten zweiten Rades (18) mit gleicher Drehzahl;

Vorwärtsdrehung des genannten ersten Rades (17) entweder allein oder in Verbindung mit der Vorwärtsbewegung des genannten zweiten Rades (18), wobei die Drehzahl des genannten zweiten Rades (18) niedriger ist als die Drehzahl des genannten ersten Rades (17); und

Vorwärtsdrehung des genannten zweiten Rades (18) entweder allein oder in Verbindung mit der Vorwärtsbewegung des genannten ersten Rades (17), wobei die Drehzahl des genannten ersten Rades (17) niedriger ist als die Drehzahl des genannten zweiten Rades (18).

14. Verfahren gemäß irgend einem der Ansprüche 7 bis 13, **dadurch gekennzeichnet, dass** der Schritt zur Ermittlung des genannten tatsächlichen Lenkwinkels seinerseits den Schritt umfasst:

Nutzung einer Eingabemöglichkeit durch eine Bedienperson oder einer äußeren Eingabemöglichkeit.

15. Verfahren gemäß Anspruch 14, **dadurch gekennzeichnet, dass** die genannte äußere Eingabe durch ein Signal erfolgt, welches durch die Erfassung eines magnetischen Feldes erzeugt wird.

16. Vorrichtung zur Positionsbestimmung (50) eines selbständig arbeitenden Gerätes (1), welche umfasst:

Mittel (51, 52) zur Ermittlung der Drehung eines ersten (17) bzw. eines zweiten (18) Rades; und

Mittel (53) zur Berechnung der Positionsänderung auf der Grundlage der Drehung des genannten ersten und des genannten zweiten Rades und der Spurweite (30), wobei die genannten Berechnungsmittel mit den genannten Mitteln (51, 52) zur Messung der genannten Raddrehungen verbunden sind, **gekennzeichnet durch**

Mittel (54) zur Ermittlung eines Fahrmodus (40a-40u) auf der Grundlage der genannten Raddrehungen in Verbindung mit den genannten Berechnungsmitteln (53), wobei die genannten Berechnungsmittel 53 so ausgelegt sind, dass die genannte Berechnung auf der Grundlage der tatsächlich vorliegenden Spurweite (30) im Zusammenhang mit dem genannten Fahrmodus (40) erfolgt, wobei die Bewegung des selbständig arbeitenden Gerätes in unterschiedliche Fahrmodi unterteilt ist, von denen jeder einzelne mit einer Spurweite verknüpft ist, welche im Wesentlichen konstant ist.

17. Vorrichtung gemäß Anspruch 16, **dadurch gekennzeichnet, dass** der genannte Fahrmodus (40a-40u) mittels der Drehgeschwindigkeiten des genannten ersten (17) und des genannten zweiten (18) Rades festgelegt wird.

18. Vorrichtung gemäß Anspruch 17, **dadurch gekennzeichnet, dass** der genannte Fahrmodus (40a-401, 40q, 40s) durch einen gewissen Bereich von Verhältnissen zwischen den genannten Drehgeschwindigkeiten festgelegt wird.

19. Vorrichtung gemäß Anspruch 17, **dadurch gekennzeichnet, dass** der genannte Fahrmodus (40m-40p) **dadurch** festgelegt wird, dass die genannte Drehgeschwindigkeit des genannten ersten Rades (17) innerhalb eines vorher festgelegten ersten Geschwindigkeitsbereiches liegt.

20. Vorrichtung gemäß Anspruch 17 oder 19, **dadurch gekennzeichnet, dass** der genannte Fahrmodus (40m-40p) **dadurch** festgelegt wird, dass die genannte Drehgeschwindigkeit des genannten zweiten Rades (18) innerhalb eines vorher festgelegten zweiten Geschwindigkeitsbereiches liegt.

21. Vorrichtung gemäß Anspruch 17, welche **gekennzeichnet ist durch** fünf Fahrmodi (40q-40u), welche festgelegt sind **durch**:

Vorwärtsdrehung des genannten ersten Rades (17) und Vorwärtsdrehung des genannten zweiten Rades (18) mit gleichen Drehgeschwindigkeiten;

Vorwärtsdrehung des genannten ersten Rades (17) und Rückwärtsdrehung des genannten zweiten Rades (18) mit gleicher Drehzahl;

Rückwärtsdrehung des genannten ersten Rades (17) und Vorwärtsdrehung des genannten zweiten Rades (18) mit gleicher Drehzahl;

Vorwärtsdrehung des genannten ersten Rades (17) entweder allein oder in Verbindung mit der Vorwärtsbewegung des genannten zweiten Rades (18), wobei die Drehzahl des genannten zweiten Rades (18) niedriger ist als die Drehzahl des genannten ersten Rades (17); und Vorwärtsdrehung des genannten zweiten Rades (18) entweder allein oder in Verbindung mit der Vorwärtsbewegung des genannten ersten Rades (17), wobei die Drehzahl des genannten ersten Rades (17) niedriger ist als die Drehzahl des genannten zweiten Rades (18).

22. Vorrichtung gemäß irgend einem der Ansprüche 16 bis 20, **dadurch gekennzeichnet, dass** die Mittel zur Positionskalibrierung seinerseits umfassen:

Mittel (22) zur Ausrichtung des genannten selbständig arbeitenden Gerätes (1) in eine Ausgangsrichtung;

Mittel (21), um das Antriebsmittel (60) zu veranlassen, das genannte selbständig arbeitende Gerät (1) in einen ersten aus einer Anzahl von Fahrmodi (40a-40u) zu versetzen;

Mittel (80) zur Ermittlung des tatsächlichen Lenkwinkels des genannten selbständig arbeitenden Gerätes (1);

erste Berechnungsmittel (70) zur Berechnung der genannten tatsächlich vorliegenden Spurweite (30) im Zusammenhang mit dem genannten ersten Fahrmodus (40a-40u) auf der Grundlage der genannten gemessenen Raddrehungen und des genannten ermittelten tatsächlichen Lenkwinkels.

23. Mittel gemäß Anspruch 22, **dadurch gekennzeichnet, dass** die genannten ersten Berechnungsmittel (70) ihrerseits umfassen:

zweite Berechnungsmittel (71) zur Berechnung des zu erwartenden Gesamtlenkwinkels des genannten selbständig arbeitenden Gerätes (1) auf der Grundlage der genannten gemessenen Raddrehungen und der vorläufigen Spurweite;

dritte Berechnungsmittel (72) zur Berechnung der Differenz zwischen dem genannten zu erwartenden und dem genannten tatsächlichen Lenkwinkel des genannten selbständig arbeitenden Gerätes (1); und

Mittel (73) zur Ermittlung der genannten tatsächlichen Spurweite (30) als Korrektur der genannten vorläufigen Spurweite auf der Grundlage der genannten Differenz.

24. Mittel zur Positionskalibrierung des selbständig arbeitenden Gerätes, **gekennzeichnet durch**

Mittel (22) zur Ausrichtung des genannten selbständig arbeitenden Gerätes (1) in eine Ausgangsrichtung;

Mittel (21), um das Antriebsmittel (60) zu veranlassen, das genannte selbständig arbeitende Gerät (1) in einen ersten aus einer Anzahl von Fahrmodi (40a-40u) zu versetzen;

Mittel (80) zur Ermittlung des tatsächlichen Lenkwinkels des genannten selbständig arbeitenden Gerätes (1);

Mittel (51, 52) zur Messung der Raddrehung des ersten Rades (17) bzw. des zweiten Rades (18); und

erste Berechnungsmittel (70) zur Berechnung der tatsächlich vorliegenden Spurweite (30) im Zusammenhang mit jedem einzelnen der Fahrmodi (40a-40u) auf der Grundlage der genannten gemessenen Raddrehungen und des genannten ermittelten tatsächlichen Gesamtlenkwinkels, wobei die genannten ersten Berechnungsmittel (70) mit den genannten Mitteln (80) zur Ermittlung des genannten tatsächlichen Lenkwinkels und die genannten Mittel (51, 52) zur Messung der genannten Raddrehungen verbunden sind, wobei die Bewegung des selbständig arbeitenden Gerätes in unterschiedliche Fahrmodi unterteilt ist, von denen jeder einzelne mit einer Spurweite verknüpft ist, welche im Wesentlichen konstant ist.

25. Mittel gemäß Anspruch 24, **dadurch gekennzeichnet, dass** die genannten ersten Berechnungsmittel (70) ihrerseits umfassen:

zweite Berechnungsmittel (71) zur Berechnung des zu erwartenden Gesamtlenkwinkels des genannten selbständig arbeitenden Gerätes (1) auf der Grundlage der genannten gemessenen Raddrehungen und der vorläufigen Spurweite;

dritte Berechnungsmittel (72) zur Berechnung der Differenz zwischen dem genannten zu erwartenden und dem genannten tatsächlichen Lenkwinkel des genannten selbständig arbeitenden Gerätes (1); und

Mittel (73) zur Ermittlung der genannten tatsächlichen Spurweite (30) als Korrektur der genannten vorläufigen Spurweite auf der Grundlage der genannten Differenz.

26. Mittel gemäß Anspruch 24 oder 25, **dadurch gekennzeichnet, dass** die Fahrmodi (40a-40u) mittels der Drehgeschwindigkeiten des genannten ersten (17) und des genannten zweiten (18) Rades festgelegt werden.

27. Mittel gemäß Anspruch 26, **dadurch gekennzeichnet, dass** die genannten Fahrmodi (40a-401, 40q, 40s) durch einen gewissen Bereich von Verhältnissen zwischen den genannten Drehgeschwindigkeiten festgelegt werden.

28. Mittel gemäß Anspruch 26, **dadurch gekennzeichnet, dass** mindestens einer der genannten Fahrmodi (40m-40p) **dadurch** festgelegt wird, dass die genannte Drehgeschwindigkeit des genannten ersten Rades (17) innerhalb eines vorher festgelegten ersten Geschwindigkeitsbereiches liegt.

29. Mittel gemäß Anspruch 26 oder 28, **dadurch gekennzeichnet, dass** mindestens einer der genannten Fahrmodi (40m-40p) **dadurch** festgelegt wird, dass die genannte Drehgeschwindigkeit des genannten zweiten Rades (18) innerhalb eines vorher festgelegten zweiten Geschwindigkeitsbereiches liegt.

30. Mittel gemäß Anspruch 26, welche **gekennzeichnet sind durch** fünf Fahrmodi (40q-40u), welche festgelegt sind **durch**:

Vorwärtsdrehung des genannten ersten Rades (17) und Vorwärtsdrehung des genannten zweiten Rades (18) mit gleichen Drehgeschwindigkeiten;

Vorwärtsdrehung des genannten ersten Rades (17) und Rückwärtsdrehung des genannten zweiten Rades (18) mit gleicher Drehzahl;

Rückwärtsdrehung des genannten ersten Rades (17) und Vorwärtsdrehung des genannten zweiten Rades (18) mit gleicher Drehzahl;

Vorwärtsdrehung des genannten ersten Rades (17) entweder allein oder in Verbindung mit der Vorwärtsbewegung des genannten zweiten Rades (18), wobei die Drehzahl des genannten zweiten Rades (18) niedriger ist als die Drehzahl des genannten ersten Rades (17); und

Vorwärtsdrehung des genannten zweiten Rades (18) entweder allein oder in Verbindung mit der Vorwärtsbewegung des genannten ersten Rades (17), wobei die Drehzahl des genannten ersten Rades (17) niedriger ist als die Drehzahl des genannten zweiten Rades (18).

**31.** Mittel gemäß irgend einem der Ansprüche 24 bis 30, **dadurch gekennzeichnet, dass** das genannte Mittel (22), welches den genannten tatsächlichen Gesamtlenkwinkel des genannten selbständig arbeitenden Gerätes ermittelt, seinerseits Eingabemittel durch eine Bedienperson oder äußere Eingabemittel umfasst.

**32.** Mittel gemäß Anspruch 31, **dadurch gekennzeichnet, dass** das genannte äußere Eingabemittel ein Magnetfelddetektor ist.

**33.** Mittel gemäß Anspruch 32, **dadurch gekennzeichnet, dass** der genannte Magnetfelddetektor ein Hall-Geber (23, 24) ist.

## Revendications

**1.** Procédé de détermination de position pour un appareil autonome (1), comprenant les étapes consistant à :

déterminer une rotation de roue d'une première roue (17) et d'une seconde roue (18), respectivement ; et
calculer un changement de position en se basant sur lesdites rotations des première et seconde roues et une largeur de voie (30), **caractérisé en outre par** l'étape consistant à :

déterminer un mode d'entraînement (40a-40u) en se basant sur lesdites rotations de roues, moyennant quoi ladite étape de calcul est basée sur une largeur de voie réelle (30) associée audit mode d'entraînement (40a-40u),

dans lequel le mouvement de l'appareil autonome est divisé en différents modes d'entraînement pour chacun desquels une largeur de voie associée est sensiblement constante.

**2.** Procédé selon la revendication 1, **caractérisé en**

**ce que** ledit mode d'entraînement (40a-40u) est défini au moyen de vitesses de rotation de ladite première roue (17) et de ladite seconde roue (18).

**3.** Procédé selon la revendication 2, **caractérisé en ce que** ledit mode d'entraînement (40a-401, 40q, 40s) est défini par une plage de rapports entre lesdites vitesses de rotation.

**4.** Procédé selon la revendication 2, **caractérisé en ce que** ledit mode d'entraînement (40m-40p) est défini **en ce que** ladite vitesse de rotation de ladite première roue (17) se trouve dans une première plage de vitesses prédéterminée.

**5.** Procédé selon la revendication 2 ou 4, **caractérisé en ce que** ledit mode d'entraînement (40m-40p) est défini **en ce que** ladite vitesse de rotation de ladite seconde roue (18) se trouve dans une seconde plage de vitesses prédéterminée.

**6.** Procédé selon la revendication 2, **caractérisé par** cinq modes d'entraînement (40q-40u) définis par :

une rotation vers l'avant de ladite première roue (17) et une rotation vers l'avant de ladite seconde roue (18) avec des vitesses de rotation égales ;
une rotation vers l'avant de ladite première roue (17) et une rotation vers l'arrière de ladite seconde roue (18) avec une vitesse de rotation égale ;
une rotation vers l'arrière de ladite première roue (17) et une rotation vers l'avant de ladite seconde roue (18) avec une vitesse de rotation égale ;
une rotation vers l'avant de ladite première roue (17), soit seule, soit en combinaison avec un mouvement vers l'avant de ladite seconde roue (18), où la vitesse de rotation de ladite seconde roue (18) est inférieure à la vitesse de rotation de ladite première roue (17) ; et
une rotation vers l'avant de ladite seconde roue (18), soit seule, soit en combinaison avec un mouvement vers l'avant de ladite première roue (17), où la vitesse de rotation de ladite première roue (17) est inférieure à la vitesse de rotation de ladite seconde roue (18).

**7.** Procédé d'étalonnage pour un dispositif de positionnement (50) d'un appareil autonome (1), **caractérisé par** les étapes consistant à :

aligner ledit appareil autonome (1) dans une direction initiale ;
faire tourner ledit appareil autonome (1) dans un d'un certain nombre de modes d'entraînement (40a-40u) ;

déterminer un angle de rotation total réel dudit appareil autonome (1) ;

mesurer une rotation de roue d'une première roue (17) et d'une seconde roue (18), respectivement ; et

calculer une largeur de voie réelle (30) associée à chacun des modes d'entraînement (40a-40u), en se basant sur les rotations de roues et ledit angle de rotation total réel déterminé,

dans lequel le mouvement de l'appareil autonome est divisé en lesdits différents modes d'entraînement pour chacun desquels une largeur de voie associée est sensiblement constante.

8. Procédé selon la revendication 7, **caractérisé en ce que** ladite étape de calcul comprend à son tour les étapes consistant à :

calculer un angle de rotation total escompté dudit appareil autonome (1) en se basant sur lesdites rotations de roues mesurées et une largeur de voie provisoire ;

calculer une différence entre lesdits angles de rotation escompté et réel dudit appareil autonome (1) ; et

déterminer ladite largeur de voie réelle (30) en tant que correction de ladite largeur de voie provisoire en se basant sur ladite différence.

9. Procédé selon les revendications 7 ou 8, **caractérisé en ce que** lesdits modes d'entraînement (40a-40u) sont définis au moyen de vitesses de rotation de ladite première roue (17) et de ladite seconde roue (18).

10. Procédé selon la revendication 9, **caractérisé en ce que** lesdits modes d'entraînement (40a-401, 40q, 40s) sont définis par une plage de rapports entre lesdites vitesses de rotation.

11. Procédé selon la revendication 9, **caractérisé en ce qu'**au moins un desdits modes d'entraînement (40m-40p) est défini **en ce que** ladite vitesse de rotation de ladite première roue (17) se trouve dans une première plage de vitesses prédéterminée.

12. Procédé selon les revendications 9 ou 11, **caractérisé en ce qu'**au moins un desdits modes d'entraînement (40m-40p) est défini **en ce que** ladite vitesse de rotation de ladite seconde roue (18) se trouve dans une seconde plage de vitesses prédéterminée.

13. Procédé selon la revendication 9, **caractérisé par** cinq modes d'entraînement (40q-40u) définis par :

une rotation vers l'avant de ladite première roue (17) et une rotation vers l'avant de ladite seconde roue (18) avec des vitesses de rotation égales ;

une rotation vers l'avant de ladite première roue (17) et une rotation vers l'arrière de ladite seconde roue (18) avec une vitesse de rotation égale ;

une rotation vers l'arrière de ladite première roue (17) et une rotation vers l'avant de ladite seconde roue (18) avec une vitesse de rotation égale ;

une rotation vers l'avant de ladite première roue (17), soit seule, soit en combinaison avec un mouvement vers l'avant de ladite seconde roue (18), où la vitesse de rotation de ladite seconde roue (18) est inférieure à la vitesse de rotation de ladite première roue (17) ; et

une rotation vers l'avant de ladite seconde roue (18), soit seule, soit en combinaison avec un mouvement vers l'avant de ladite première roue (17), où la vitesse de rotation de ladite première roue (17) est inférieure à la vitesse de rotation de ladite seconde roue (18).

14. Procédé selon l'une quelconque des revendications 7 à 13, **caractérisé en ce que** ladite étape de détermination d'angle de rotation réel comprend l'étape consistant à :

utiliser une entrée opérateur ou une entrée externe.

15. Procédé selon la revendication 14, **caractérisé en ce que** ladite entrée externe est un signal généré par la détection d'un champ magnétique.

16. Dispositif de détermination de position (50) d'un appareil autonome (1) comprenant :

des moyens (51, 52) pour déterminer une rotation de roue d'une première roue (17) et d'une seconde roue (18), respectivement ; et des moyens (53) pour calculer un changement de position en se basant sur lesdites rotations des première et seconde roues et une largeur de voie (30), lesdits moyens de calcul étant connectés auxdits moyens (51, 52) pour mesurer lesdites rotations de roues,

**caractérisé par** :

des moyens (54) pour déterminer un mode d'entraînement (40a-40u) en se basant sur lesdites rotations de roues connectés auxdits moyens de calcul (53), moyennant quoi lesdits moyens de calcul (53) sont agencés pour baser ledit calcul sur une largeur de voie réelle (30) associée audit mode d'entraînement (40a-40u),

dans lequel le mouvement de l'appareil autonome est divisé en différents modes d'entraînement pour chacun desquels une largeur de voie associée est sensiblement constante.

**17.** Dispositif selon la revendication 16, **caractérisé en ce que** ledit mode d'entraînement (40a-40u) est défini au moyen de vitesses de rotation de ladite première roue (17) et de ladite seconde roue (18).

**18.** Dispositif selon la revendication 17, **caractérisé en ce que** ledit mode d'entraînement (40a-40l, 40q, 40s) est défini par une plage de rapports entre lesdites vitesses de rotation.

**19.** Dispositif selon la revendication 17, **caractérisé en ce que** ledit mode d'entraînement (40m-40p) est défini **en ce que** ladite vitesse de rotation de ladite première roue (17) se trouve dans une première plage de vitesses prédéterminée.

**20.** Dispositif selon la revendication 17 ou 18, **caractérisé en ce que** ledit mode d'entraînement (40m-40p) est défini **en ce que** ladite vitesse de rotation de ladite seconde roue (18) se trouve dans une seconde plage de vitesses prédéterminée.

**21.** Procédé selon la revendication 17, **caractérisé par** cinq modes d'entraînement (40q-40u) définis par :

une rotation vers l'avant de ladite première roue (17) et une rotation vers l'avant de ladite seconde roue (18) avec des vitesses de rotation égales ;
une rotation vers l'avant de ladite première roue (17) et une rotation vers l'arrière de ladite seconde roue (18) avec une vitesse de rotation égale ;
une rotation vers l'arrière de ladite première roue (17) et une rotation vers l'avant de ladite seconde roue (18) avec une vitesse de rotation égale ;
une rotation vers l'avant de ladite première roue (17), soit seule, soit en combinaison avec un mouvement vers l'avant de ladite seconde roue (18), où la vitesse de rotation de ladite seconde roue (18) est inférieure à la vitesse de rotation de ladite première roue (17) ; et
une rotation vers l'avant de ladite seconde roue (18), soit seule, soit en combinaison avec un mouvement vers l'avant de ladite première roue (17), où la vitesse de rotation de ladite première roue (17) est inférieure à la vitesse de rotation de ladite seconde roue (18).

**22.** Dispositif selon l'une quelconque des revendications 16 à 21, **caractérisé par** des moyens d'étalonnage de position comprenant à leur tour :

des moyens (22) pour aligner ledit appareil autonome (1) dans une direction initiale ;
des moyens (21) pour inciter les moyens d'entraînement (60) à faire tourner ledit appareil autonome (1) dans un premier d'un certain nombre de modes d'entraînement (40a-40u) ;
des moyens (80) pour déterminer un angle de rotation total réel dudit appareil autonome (1) ;
des premiers moyens de calcul (70) pour calculer ladite largeur de voie réelle (30) associée audit premier mode d'entraînement (40a-40u) en se basant sur lesdites rotations de roues mesurées et ledit angle de rotation total réel déterminé.

**23.** Moyens selon la revendication 22, **caractérisés en ce que** lesdits premiers moyens de calcul (70) comprennent à leur tour :

des deuxièmes moyens de calcul (71) pour calculer un angle de rotation total escompté dudit appareil autonome (1) en se basant sur lesdites rotations de roues mesurées et une largeur de voie provisoire ;
des troisièmes moyens de calcul (72) pour calculer une différence entre lesdits angles de rotation escompté et réel dudit appareil autonome (1) ; et
des moyens (73) pour déterminer ladite largeur de voie réelle (30) en tant que correction de ladite largeur de voie provisoire en se basant sur ladite différence.

**24.** Moyens d'étalonnage de position d'un appareil autonome, **caractérisé par** :

des moyens (22) pour aligner ledit appareil autonome (1) dans une direction initiale ;
des moyens (21) pour inciter les moyens d'entraînement (60) à faire tourner ledit appareil autonome (1) dans un d'un certain nombre de modes d'entraînement (40a-40u) ;
des moyens (80) pour déterminer un angle de rotation réel dudit appareil autonome (1) ;
des moyens (51, 52) pour mesurer une rotation de roue d'une première roue (17) et d'une seconde roue (18), respectivement ; et
des premiers moyens de calcul (70) pour calculer une largeur de voie réelle (30) associée à chacun des modes d'entraînement (40a-40u), en se basant sur lesdites rotations de roues mesurées et ledit angle de rotation total réel déterminé, lesdits premiers moyens de calcul (70) étant connectés auxdits moyens (80) pour déterminer ledit angle de rotation réel et auxdits moyens (51, 52) pour mesurer lesdites rotations de roues,

dans lesquels le mouvement de l'appareil autonome est divisé en lesdits différents modes d'entraînement pour chacun desquels une largeur de voie associée est sensiblement constante.

25. Moyens selon la revendication 24, **caractérisés en ce que** lesdits premiers moyens de calcul (70) comprennent à leur tour :

des seconds moyens de calcul (71) pour calculer un angle de rotation total escompté dudit appareil autonome (1) en se basant sur lesdites rotations de roues mesurées et une largeur de voie provisoire ;
des troisièmes moyens de calcul (72) pour calculer une différence entre lesdits angles de rotation escompté et réel dudit appareil autonome (1) ; et
des moyens (73) pour déterminer ladite largeur de voie réelle (30) en tant que correction de ladite largeur de voie provisoire en se basant sur ladite différence.

26. Moyens selon les revendications 24 ou 25, **caractérisés en ce que** les modes d'entraînement (40a-40u) sont définis au moyen des vitesses de rotation de ladite première roue (17) et de ladite seconde roue (18).

27. Moyens selon la revendication 26, **caractérisés en ce que** lesdits modes d'entraînement (40a-401, 40q, 40s) sont définis par une plage de rapports entre lesdites vitesses de rotation.

28. Moyens selon la revendication 26, **caractérisés en ce qu'**au moins un desdits modes d'entraînement (40m-40p) est défini **en ce que** ladite vitesse de rotation de ladite première roue (17) se trouve dans une première plage de vitesses prédéterminée.

29. Moyens selon la revendication 26 ou 28, **caractérisés en ce qu'**au moins un desdits modes d'entraînement (40m-40p) est défini **en ce que** ladite vitesse de rotation de ladite seconde roue (18) se trouve dans une seconde plage de vitesses prédéterminée.

30. Moyens selon la revendication 26, **caractérisé par** cinq modes d'entraînement (40q-40u) définis par :

une rotation vers l'avant de ladite première roue (17) et une rotation vers l'avant de ladite seconde roue (18) avec des vitesses de rotation égales ;
une rotation vers l'avant de ladite première roue (17) et une rotation vers l'arrière de ladite seconde roue (18) avec une vitesse de rotation égale ;
une rotation vers l'arrière de ladite première roue (17) et une rotation vers l'avant de ladite seconde roue (18) avec une vitesse de rotation égale ;
une rotation vers l'avant de ladite première roue (17), soit seule, soit en combinaison avec un mouvement vers l'avant de ladite seconde roue (18), où la vitesse de rotation de ladite seconde roue (18) est inférieure à la vitesse de rotation de ladite première roue (17) ; et
une rotation vers l'avant de ladite seconde roue (18), soit seule, soit en combinaison avec un mouvement vers l'avant de ladite première roue (17), où la vitesse de rotation de ladite première roue (17) est inférieure à la vitesse de rotation de ladite seconde roue (18).

31. Moyens selon l'une quelconque des revendications 24 à 30, **caractérisé en ce que** lesdits moyens (22) déterminant ledit angle de rotation total réel dudit appareil autonome comprennent à leur tour des moyens d'entrée opérateur ou d'entrée externe.

32. Moyens selon la revendication 31, **caractérisés en ce que** lesdits moyens d'entrée externe sont un détecteur de champ magnétique.

33. Moyens selon la revendication 32, **caractérisés en ce que** ledit détecteur de champ magnétique est un capteur de Hall (23, 24).

Fig. 1

Fig. 2

Fig. 3

Fig. 6a

Fig. 6b

Fig. 4

Fig. 5a

Fig. 5b

Fig. 5c

Fig. 7

Fig. 8

START 200

ALIGN IN INITIAL DIRECTION 201

TURN APPARATUS 202

DETERMINE ACTUAL TURNING ANGLE 203

MEASURE WHEEL ROTATION 204

CALCULATE ACTUAL TRACK WIDTH 205

STOP 209

**Fig. 9a**

FROM STEP 205

CALCULATE EXPECTED TURNING ANGLE 206

CALCULATE DIFFERENCE BETWEEN EXPECTED AND ACTUAL TURNING ANGLE 207

DETERMINE ACTUAL TRACK WIDTH 208

TO STEP 209

**Fig. 9b**